Europäisches Patentamt

European Patent Office

Office européen des brevets

(19)

(11) Publication number: 0 344 449
A2

(12) # EUROPEAN PATENT APPLICATION

(21) Application number: 89107218.3

(22) Date of filing: 21.04.89

(51) Int. Cl.⁴: $C08L\ 83/04$ , $C08K\ 5/57$ , $C08K\ 13/02$

(30) Priority: 31.05.88 US 200482

(43) Date of publication of application:
06.12.89 Bulletin 89/49

(84) Designated Contracting States:
BE DE ES FR GB IT NL SE

(71) Applicant: GENERAL ELECTRIC COMPANY
1 River Road
Schenectady New York 12305(US)

(72) Inventor: Stein, Judith
1005 Union Street
Schenectady New York 12308(US)
Inventor: Leonard, Tracey Mayne
2215 Huntridge Drive
Clifton Park7New York 12065(US)

(74) Representative: Catherine, Alain
General Electric France Service de Propriété
Industrielle 18 Rue Horace Vernet B.P. 76
F-92134 Issy-les-Moulineaux Cédex(FR)

(54) Curable silicone latex compositions.

(57) Curable silicone latex compositions are provided using a nonionically stabilized silanol-terminated polydiorganosiloxane, water, colloidal silica, a silane cross-linker, a tin condensation catalyst, and calcium carbonate.

EP 0 344 449 A2

EP 0 344 449 A2

## CURABLE SILICONE LATEX COMPOSITIONS

### BACKGROUND OF THE INVENTION

Prior to the present invention, curable silicone emulsions providing an elastomer upon water removal were shown by J.F. Hyde et al., U.S. Patent 2,891,920. It was found that the compositions of Hyde et al. required either a strong acid or a strong base to achieve stability of the emulsion. As a result, Hyde et al.'s silicone emulsions were limited in use due to their adverse effects on various substrates. Improved results are shown by D.E. Findlay et al., U.S. Patent 3,294,725, employing a surface active sulfonic acid catalyst to achieve a stable emulsion and allow for the copolymerization of organo-siloxanes and silcarbanes. An additional procedure for making silicone rubber latexes is shown by J. Cekada, Jr., U.S. Patent 3,355,406, utilizing silsesquioxanes to reinforce the polymer.

The present invention is based on the discovery that stable aqueous curable silicone latex compositions can be made by initially emulsifying silanol-terminated polydiorganosiloxane in the presence of a nonionic surfactant, such as an alkylaryloxypoly(ethyleneoxy)ethanol followed by a pH adjustment up to 5 with a carboxylic acid, such as succinic acid. Also used in the emulsion are alkyltrialkoxysilane, for example methyltrimethoxysilane and a tin catalyst, such as a stannoxane, hydroxystannoxane, or a monomethoxy tin compound. Among the preferred tin compounds are stannoxanes of the formula,

$$(R)_2SnX\text{-}O\text{-}Sn(R^1)_2OH, \qquad (1)$$

where R and $R^1$ are selected from the same or different $C_{(1-8)}$ alkyl radicals, and preferably butyl, and X is a halogen radical, or an acyloxy radical, and is preferably chloro.

In addition, calcium carbonate can be utilized at up to 50% by weight of the resulting curable silicone composition. The resulting silicone caulk has been found to have superior shelf life, such as six months or more, and elastomers resulting from the removal of water from such caulking compounds have been found to have excellent physical properties.

### STATEMENT OF THE INVENTION

There is provided by the present invention, a silicone caulking composition comprising by weight,

(A) 100 parts of a base formulation consisting essentially of an aqueous emulsion having 40 to 60% by weight solids and a pH in the range of about 4 to 6, of a silanol-terminated polydiorganosiloxane having a molecular weight of about $5 \times 10^3$ to about $15 \times 10^3$, and an effective amount of a nonionic surfactant,

(B) 0.1 to 5 parts and preferably 0.5 to 1.5 part of a silane cross-linker,

(C) up to 50 parts of a nonsiliceous filler, and

(D) 0.3 to 2 parts and preferably 0.4 to 1.5 part of a tin catalyst selected from the class consisting of stannoxanes, hydroxystannoxanes, and monoalkoxystannanes.

The aqueous emulsion of the silanol-terminated polydiorganosiloxane are preferably made by agitating a linear silanol-terminated polydiorganosiloxane in an aqueous media in the presence of 1% to 5% by weight of total emulsion of a nonionic surfactant. The pH of the emulsion can be adjusted to 4 to 6 by adding a carboxylic acid such as succinic acid.

The silanol-terminated polydiorganosiloxanes which can be used in the practice of the present invention have organo radicals attached to silicon which are selected from $C_{(1-13)}$, monovalent hydrocarbon radicals, and $C_{(1-13)}$ monovalent hydrocarbon radicals substituted with radicals inert during equilibration. Some of the organo radicals are, for example, $C_{(1-8)}$ alkyl radicals such as methyl, ethyl, propyl, butyl, pentyl, hexyl; haloalkyl radicals such as trifluoropropyl; and cyanoalkyl radicals such as cyanoethyl and cyanopropyl. In addition, the organo radicals attached to silicon can be selected from alkenyl radicals such as vinyl radicals; allyl radicals; alkylaryl radicals such as ethyl, phenyl; and arylkyl radicals such as tolyl, xylyl, etc. The monovalent organo radicals also can be aryl radicals such as phenyl, halophenyl such as chlorophenyl, bromophenyl, naphthyl radicals, anthro radicals, etc.

Silanol-terminated polydiorganosiloxanes useful in the practice of the invention are shown by W. Noll, "Chemistry and Technology of Silicones", Academic Press, New York (1968) p. 240. They can be prepared by the polymerization of cyclic siloxanes, such as octamethyltetracyclosiloxanes, using acidic or basic catalysis. These silanolorganosiloxanes can be emulsified in water with nonionic emulsifying agents, such as alkylaryloxypoly(etheneoxy)ethanol. Useful nonionic emulsifying agents are the nonionic surfactant which can be used in the practice of the invention are, for example, saponins, condensation products of fatty acids with ethyleneoxide such as dodecylether of tetraethyleneoxide, and condensation production of ethyleneoxide with sorbitan trioleate.

Acidic colloidal silica also can be used in the practice of the invention in the silicone caulking composition which can be present at from 1 to 10 percent based on total weight of composition.

There is also utilized in the caulking composition of the present invention, a trialkoxyorganosilane cross-linker, such as methyltrimethoxysilane, to effect a satisfactory cure in the resulting elastomer. Additional trialkoxyorganosilanes are, for example, methyltriethoxysilane, ethyltriethoxysilane, and methyltripropoxysilane.

The caulking compositions of the present invention have been found to have optimum shelf stability when there is employed from about 0.3% to 0.6% by weight of stannoxane of formula (1). Stannoxanes of formula (1) and method for making are shown by U.S. Patent 3,664,997. Preferably, the stannoxanes of formula (1) include compounds such as

$(C_4H_7)_2SnCl-O-(C_4H_7)_2SnOH$, and

$$(C_4H_7)_2Sn(O\overset{\overset{O}{\|}}{C}CH_3)-O(C_4H_7)_2SnOH .$$

Other tin compounds which can be used are, for example,

$$(C_4H_7)_2Sn(O\overset{\overset{O}{\|}}{C}CH_3)(OCH_3) .$$

In addition to the above-described ingredients, the latex compositions of the present invention also can use a nonsiliceous filler, such as 50 parts calcium carbonate per hundred parts by weight of the base composition to produce room temperature curable caulk upon water evaporation. Additional nonsiliceous fillers are, for example, titaniumoxide, aluminumoxide, carbon black, etc.

In the absence of filler, the latex composition of the present invention can be used as release agents or as coating compositions.

In order that those skilled in the art will be better able to practice the present invention, the following example is given by way of illustration and not by way of limitation. All parts are by weight.

## EXAMPLE

A base emulsion is prepared by passing through a Gaulin homogenizer a mixture of about 5000 grams of a silanol-terminated polydimethylsiloxane, about 5000 grams of water and about 200 grams of polyethylene glycol ether. The pH of the resulting mixture is adjusted by adding up to 200 grams of succinic acid. There is obtained a base formulation having about 60% solids and a pH of 4-5 of a silanol-terminated polydimethylsiloxane having an MW of about 10,000.

A mixture of 1500 g of the above base formulation is blended with 900 grams of ground calcium carbonate in a Ross double planetary mixer for 30-60 minutes, degassed, passed through a high shear Semco mixer for 15 minutes, and dispensed into anaerobic cartridges.

The above cartridges containing the base mixture are then catalyzed by injecting them with methyltrimethoxysilane, and in certain cases, acidic colloidal silica, along with toluene, and a tin curing catalyst. The following curable mixtures are prepared, which are shown in grams based on 100 parts of the base mixture, where "MTMS" is methyltrimethoxysilane, "bu" is butyl, and "Laur" is

$$CH_3(CH_2)_{10}\overset{\overset{O}{\|}}{C}- :$$

| | 1 | 2 | 3 | 4 | 5 | 6 |
|---|---|---|---|---|---|---|
| MTMS | 0.5 | 0.5 | 0.5 | 0.5 | 0.5 | 0.5 |
| toluene | - | - | - | - | 1.0 | 1.0 |
| colloidal silica | - | 3.0 | - | - | 3.0 | - |
| SM2014C[1] | 1.0 | - | - | - | - | - |
| bu$_2$Sn(OMe)(OLaur) | - | 0.5 | 0.5 | - | - | - |
| [bu$_2$Sn(OLaur)]$_2$O | - | - | - | 0.5 | - | - |
| bu$_2$SnCl-O-Snbu$_2$OH | - | - | - | - | 0.5 | 0.5 |

1) SM2014C is 33% bu$_2$Sn(OLaur)$_2$ in water with surfactants.

The materials are thoroughly mixed using a Semkit mixer. The materials are then cured for one week prior to tensile property measurement. Tensile properties are measured according to ASTM Standard D412 and the following results are obtained, where Shore A is hardness, and TS is tensile strength:

| | 1 | 2 | 3 | 4 | 5 | 6 |
|---|---|---|---|---|---|---|
| Shore A | 19(25)* | 25(28)* | 17(12)** | 22(21)*** | 14(16)* | 15(12)* |
| TS(psi) | 93(76) | 178(166) | 130(108) | 148(118) | 162(181) | 159(187) |
| Strain(%) | 398(219) | 551(527) | 638(625) | 513(501) | 695(682) | 656(694) |

\* Numbers in parentheses refer to properties obtained from materials aged in the tube for two weeks and a one week cure period.

\*\* Numbers in parentheses refer to properties obtained from materials aged in the tube for one month and a one week cure period.

\*\*\* Numbers in parentheses refer to properties obtained from materials aged in the tube for two months and a one week cure period.

The above results show that the stannoxanes are valuable condensation catalysts and materials formulated with these catalysts maintain their elongation upon aging.

Although the above results are directed to only a few of the very many variables which can be used in the practice of the present invention, it should be understood that the present invention is directed to a much broader variety of latex compositions utilizing stannoxanes, silanol-terminated polydiorganosiloxanes, cross-linking silanes, as shown in the description preceding these examples.

## Claims

1. A silicone latex composition comprising by weight,

(A) 100 parts of a base formulation consisting essentially of an aqueous emulsion having 40 to 60% by weight solids, a pH in the range of about 4 to 6, a silanol-terminated polydiorganosiloxane, and an effective amount of a nonionic surfactant,

(B) 0.1 to 5 parts of a silane cross-linker,

(C) up to 50 parts of a nonsiliceous filler, and

(D) 0.3 to 2 parts of a tin catalyst selected from the class consisting of stannoxanes, hydroxystannoxanes, and monoalkoxystannanes.

2. A caulking composition in accordance with claim 1, where the polydiorganosiloxane is a silanol-terminated polydimethylsiloxane.

3. A caulking composition in accordance with claim 1, where the stannoxane is

$(C_4H_9)_2$ $\underset{Cl}{\overset{|}{Sn}} O \underset{OH}{\overset{|}{Sn}}$ $(C_4H_9)_2$ .

4. A caulking composition in accordance with claim 1, where the nonsiliceous filler is calcium carbonate.

5. A caulking composition in accordance with claim 1, where the silane cross-linker is methyltrimethoxysilane.